# EUROPEAN PATENT APPLICATION

(11) **EP 4 729 247 A1**
(43) Date of publication of application: **22.04.2026**
(21) Application number: 25203643.9
(22) Date of filing: 22.09.2025
(51) Int. Cl.: B25J 9/16, B23K 26/03, B23K 26/08, B23K 26/36

(54) **ROBOTIC LASER ABLATION SYSTEM WITH PROGRAMMATIC SURFACE-FIT MOTION PATH GENERATION**

(30) Priority: 18.10.2024 US 202463709238 P; 14.03.2025 US 202519080526
(71) Applicant: The Boeing Company, Arlington, VA 22202 (US); University of Washington, Seattle, WA 98195 (US)
(72) Inventor: JOHNSON, Matthew Carl, Arlington, 22202 (US); GREGERSEN, Kimberly-Alice Dendramis, Arlington, 22202 (US); TAYLOR, Megan Darlene, Arlington, 22202 (US); MACHA, Vidyaaranya, Seattle, 98195 (US); GUO, James, Seattle, 98195 (US); CORREA, Peter Christopher, Seattle, 98195 (US); KAIWI, Michael Kauionalani, Jr., Seattle, 98195 (US); PEDIGO, Samuel Francis, Seattle, 98195 (US)
(74) Representative: Sandri, Sandro

(57) **Abstract**

Described herein is a robotic laser ablation system that comprises a robot and processing circuitry. The robot has an end effector with laser componentry and a camera mounted thereto. Processing circuitry is configured, in response to stored instructions, to perform operations including: receiving the input image of a workpiece from the camera; segmenting the input image to produce an image segment that depicts at least a portion of the workpiece; applying a surface-fitting algorithm to generate a polynomial surface that is fit to the surface in the image segment; computing a set of surface normal vectors across the polynomial surface to generate a set of waypoints offset from the polynomial surface by an offset length; programmatically generating a motion path linking a plurality of the waypoints; and performing laser ablation of the surface of the portion of the workpiece based on the motion path.

## Description

### CROSS REFERENCE TO RELATED APPLICATIONS

This application claims priority to U.S. Provisional Patent Application Serial Number 63/709,238, filed October 18, 2024, the entirety of which is hereby incorporated herein by reference for all purposes.

### FIELD

The present disclosure generally relates to robotic systems and methods for laser ablation. In particular, the disclosure relates to an automated system and method for surface-fitted motion path generation to perform laser ablation of a workpiece.

### BACKGROUND

In a variety of industrial settings, including manufacture, maintenance, and repair of aircraft, coatings such as paint are removed from surfaces. Existing techniques such as chemical stripping, plastic media blasting, and sanding each have associated drawbacks. Solvents used to strip paint often have adverse environmental effects, and accordingly governmental agencies regulate the use of these techniques and the disposal of the hazardous waste they generate. Plastic media blasting, while avoiding the use of such solvents, also produces a hazardous waste stream in the form of the plastic media and removed coating. Further, sanding with handheld tools presents an ergonomic burden to the operator and can generate fine particles that necessitate protective gear to shield the operator. Sanding can also result in over-removal of material, particularly when hand tools are used.

One method of removing coatings that has been considered recently is laser ablation. Laser ablation can be performed in a contained environment with filters and scrubbers that can effectively trap the waste stream. Further, laser ablation offers fine control over precisely how much material is removed, avoiding over- or under-removal of material. One technical challenge associated with laser ablation of as-manufactured parts that is present both at the time of manufacture and downstream during repair and maintenance cycles, is that the precise shape of the workpiece varies from the ideal shape of the part (i.e., the shape specified by the original CAD model, for example), due to tolerances in manufacture and also due to wear and tear on the part during use.

To properly control the laser during laser ablation, the precise distance of the laser to the part must be known, otherwise too much or not enough material may be removed. Currently, laser ablation involves (1) manual laser path creation using part CAD , and (2) manual programming of a robot to follow an ablation path that accommodates the dimensions of the scanned part. This work is time intensive, requires great support infrastructure such as robot programmers and laser technicians to implement it at scale, and fails to consider differences between the actual part "as is" and the CAD design on which the part was originally based. Opportunities exist for improvement in such laser ablation processes, to enable increased adoption of these techniques at scale.

### SUMMARY

In view of the above, a robotic laser ablation system is provided comprising a robot having an end effector configured to move in a plurality of degrees of freedom; laser componentry mounted to the end effector; a camera configured to capture light and depth information in an input image of a workpiece; and processing circuitry and associated memory storing instructions for the processing circuitry. When the stored instructions are executed, they cause the processing circuitry to: receive the input image; segment the input image to produce an image segment that depicts at least a portion of the workpiece; apply a surface-fitting algorithm to generate a polynomial surface that is fit to the surface in the image segment; compute a set of surface normal vectors across the polynomial surface and generate a set of waypoints offset from the polynomial surface by an offset length; programmatically generate a motion path linking a plurality of the waypoints; and perform laser ablation of the surface of the portion of the workpiece with the laser componentry by moving the end effector of the robot based on the motion path.

This robotic laser ablation system provides the potential beneficial technical effect of programmatically generating the motion path based upon a scan of an actual workpiece that may vary in shape as compared to a CAD design for the workpiece due to manufacturing variance or wear and tear during use, providing precise control of the offset distance from the laser to the actual workpiece surface during laser ablation to avoid over- or under-ablation, with additional benefit of reduced cycle time over fully manual path preparation.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 illustrates a robotic laser ablation system according to one implementation of the present disclosure.
FIG. 2 is a flow chart that illustrates a process flow of a laser ablation method according to one implementation of the present disclosure.
FIG. 3 shows an example pictorial process flow of the laser ablation method of FIG. 2 implemented by the robotic laser ablation system of FIG. 1.
FIG. 4 is a detail view of a robotically manipulated laser ablating a workpiece while traveling along a motion path constructed by the robotic laser ablation system of FIG. 1 according to the laser ablation method of FIG. 2.
FIG. 5 is a schematic view of an example computing system that may be used in the robotic laser ablation system of FIG. 1.

### DETAILED DESCRIPTION

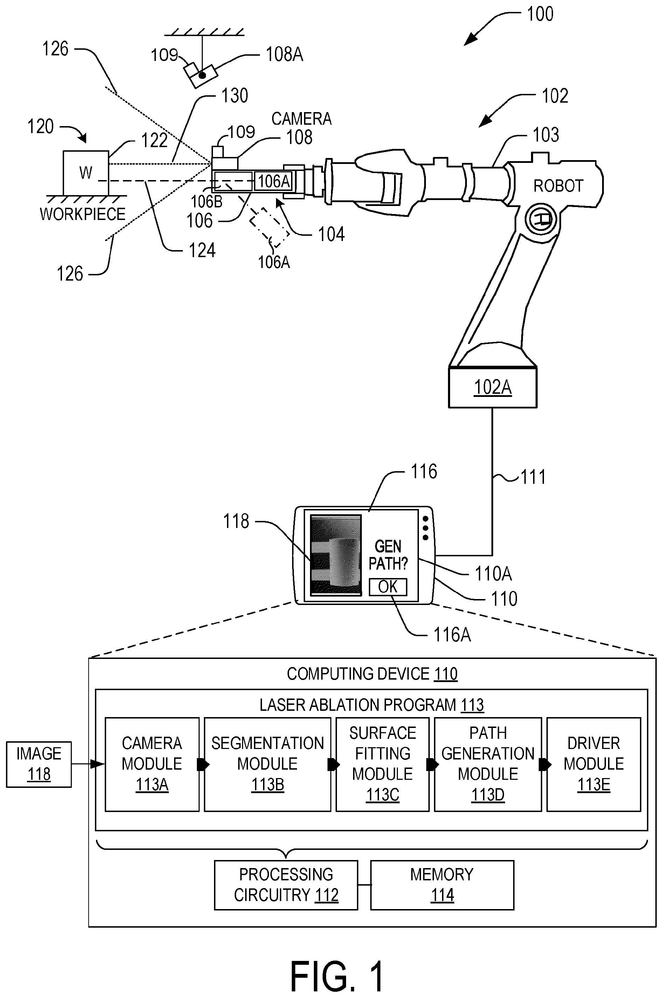

FIG. 1 illustrates a robotic laser ablation system 100, which is an example of a system suitable to implement the technology described herein. As depicted, the robotic laser ablation system 100 includes a robot 102 configured to work on a workpiece 120. The robot 102 and workpiece 120 may be housed in a containment chamber configured with a filtering system that collects airborne dust and debris, in one example. The robot includes a base 102A, an actuator 103 coupled to the base 102A, an end effector 104 mounted to an end of the actuator 103, and laser componentry 106 and a camera 108 mounted to the end effector 104. The laser componentry 106 can include a laser light source 106A and laser guiding optical elements 106B such as a scanner, mirrors, lenses, waveguides, etc. It will be appreciated that in some embodiments the laser light source 106A and laser guiding optical elements 106B of laser componentry 106 are both mounted to the end effector 104. In other embodiments, the laser light source 106A of laser componentry 106 may be mounted off-robot, and the end effector may carry laser guiding optical elements 106B of laser componentry 106 that redirect the laser from the laser light source to target areas on the workpiece 120. The actuator 103 can be mechanical, hydraulic, pneumatic, electric in nature, and configured to move the end effector 104 in a plurality of degrees of freedom. An associated computing device 110 may be communicatively coupled to the robot 102 via a wired or wireless connection 111, which may include a computer network.

The computing device 110 controls and directs the actions of the robot 102, including the end effector 104, laser componentry 106, and camera 108. The computing device 110 includes processing circuitry 112 and associated memory 114 that stores instructions for the processing circuitry 112. The instructions can be executed to implement a laser ablation program 113, including a camera module 113A, segmentation module 113B, surface fitting module 113C, path generation module 113D, and driver module 113E, the respective functions of which will be described below. The laser ablation program 113 of the computing device 110 is configured to display a graphical user-interface (GUI) 116 on a display 110A associated with the computing device 110. As illustrated, the GUI 116 shows an example image 118 captured by the camera 108, along with controls 116A for making user inputs to the laser ablation program 113.

As depicted, the robot 102 has an actuator 103 in the form of a repositionable arm with the end effector 104 attached to a distal end thereof. Thus, the robot 102 of the robotic laser ablation system 100 is configured to move the end effector 104 in a plurality of degrees of freedom (DOFs). DOF for the end effector 104 refers to the independent ways it can move in three-dimensional (3D) space.

In some implementations, the end effector 104 can have three DOFs for movement in positional space (e.g., x (left/right), y (up/down), and z (forward/backward)). In other implementations, the end effector 104 can have an additional three DOFs for changes in orientation (e.g., pitch, yaw, and roll). Other implementations can have differing number of a plurality of degrees of DOFs to accommodate movement in positional space and/or changes in orientation (e.g. placing the robot on a linear rail).

Both the laser componentry 106 and the camara 108 are mounted to the end effector 104 and are able to be positioned in a manner to face a side 122 of a workpiece 120. A path of a concentrated beam of light 124 from the laser componentry 106 during ablation of a surface of the workpiece 120 is shown in a dashed line. The field of view 126 of the camera 108 is shown in dotted lines, along with a camera axis 130 that is central to the field of view of camera 108. A predetermined three-dimensional offset between the camera axis 130 and the laser beam of light 124 is saved as a setting for the laser ablation program 113 and converts data between camera coordinates and laser coordinates as part of the laser ablation program 113. In addition or alternatively, a camera 108A can be mounted to a location other than on the end effector 104, such as the depicted overhead mounting location, in an orientation with a field of view including the workpiece 120. In addition or alternatively to cameras 108, 108A, a displacement sensor 109 can be provided on the end effector 104 or in another mounting location with a field of view of the workpiece. The displacement sensor 109 may be a laser displacement sensor, etc. The displacement sensor 109 is configured to perform a high resolution depth scan of the surface 122 of the workpiece 120. In addition or alternatively to cameras 108, 108A and displacement sensor 109, an advanced topometric optical scanner (ATOS) can be employed.

The workpiece 120 can be a part, component, mechanism, hardware, piece, member, element, and the like which can be the subject for laser ablation. A side 122 of the workpiece 120 is the subject of image-capture by the camera 108 and ultimately laser ablation by the laser componentry 106. More particularly, the side 122 of the workpiece 120 includes one or more surfaces. Although schematically depicted as a cube, in reality it will be appreciated that the workpiece 120 can have a complex shape. Thus, each surface of the workpiece 120 can be a two-dimensional surface of the three-dimensional workpiece, which can be a flat or curved two-dimensional surface. Examples of aircraft parts that can be used as the workpiece 120 include smaller parts such as doors, hinges, and fasteners, and larger parts such as fuselage sections and landing gear assemblies. As can be appreciated, the surfaces of the workpieces 120 thus can be flat, curved, or complexly shaped with both flat and curved sections. The robot 102 is configured to position the laser componentry 106 to ablate from more than one side 122 of the workpiece 120, in some implementations, either through multiple degrees of freedom in the actuator 103, and/or via a rotating turntable on which the workpiece 120 is mounted, for example.

The laser componentry 106 is configured to perform laser ablation on a surface facing the side 122 of the workpiece 120. Laser ablation is a versatile technique used to precisely remove material from a surface. For example, laser ablation can be used to accomplish material removal for reapplication of protective surface coatings such as paint, removal of oxidation layers, as well as for cleaning, cutting, drilling, and engraving, as some examples.

The camera 108 is configured to capture an input image 118 of the workpiece 120. The input image 118 includes color information and depth information for each of a plurality of pixels in the input image 118. The camera 108 can be, for example, a 3D depth camera that is configured to capture both color and depth information. The depth camera may emit non-visible light with structured patterns and measure the patterns to determine depth, or may determine depth using a time of flight or other stereoscopic technique. Further, the depth camera may utilize LiDAR (Light Detection and Ranging) technology, which measures depth by emitting laser pulses and calculating the time taken for the reflected light to return. A CMOS, CCD or other sensor may be used to gather color information for each pixel in the captured image. The depth information can be collected on a pixelwise basis and used to create a three-dimensional map of the surface of the workpiece 120. The color information can be used, along with the depth information, for image processing such as segmenting the input image 118 to feature a region of interest containing the workpiece, as discussed below.

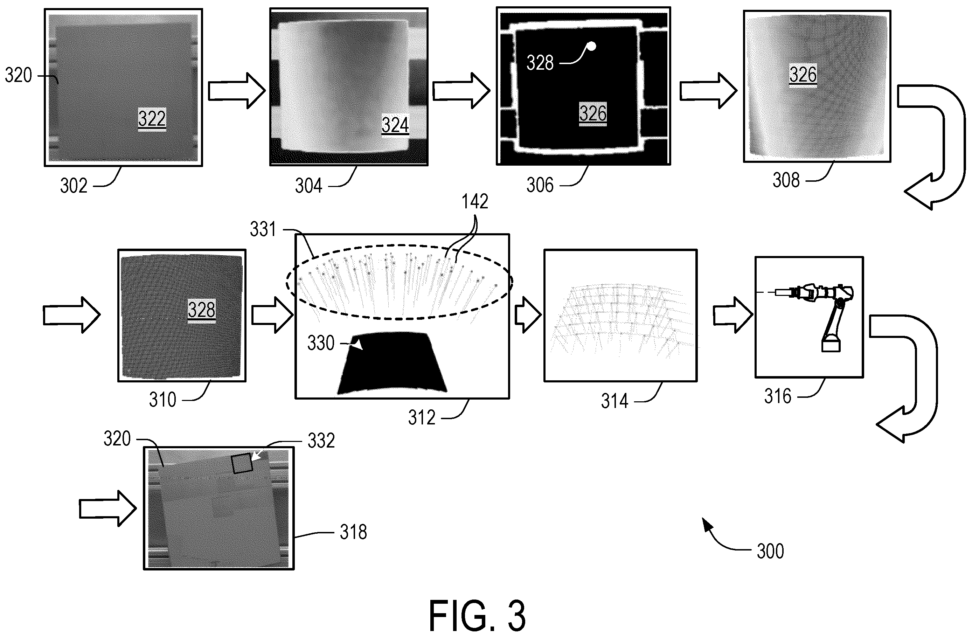

When the instructions stored in memory 114 are executed by the processing circuitry 112, they cause the processing circuitry 112 to implement the laser ablation program 113 with its constituent modules configured to perform operations as follows. Camera module 113A is configured to receive the input image 118, such as image 118, from the camera 108. The camera module 113A can be configured to perform initial image processing on the input image 118, such as adjusting contrast, brightness, cropping or other image processing techniques that facilitate downstream processing. Segmentation module 113B is configured to segment the input image 118 to produce an image segment that depicts at least a portion of the workpiece 120. It will be understood that an image segment is typically a smaller portion (e.g., a region of interest) of the input image, and that to perform the image segmentation the segmentation module 113B is configured to identify the portion of the workpiece 120 within the input image 118, and demarcate the workpiece 120 in the input image 118 by, for example, defining a boundary around it that is used to create the image segment. Suitable techniques for doing so are described in detail below, with reference to workpiece 320 and FIG. 3, which is an example of workpiece 120 of FIG. 1.

Surface fitting module 113C receives the image segment from the segmentation module 113B and is configured to apply a surface-fitting algorithm to generate a polynomial surface that is fit to the surface in the image segment. It will be appreciated that camera 108 may be a depth camera as described above, which is configured to capture color information and depth information on a pixel-wise basis. Accordingly, the image segment contains a set of pixels not only defined by their RGB color values and x-y positions in the input image pixel array, but also by the depth value for each pixel. From this x, y, and depth information, discrete parameterized values for a surface of the workpiece 120 can be determined. The surface fitting module 113C is configured to generate a continuous polynomial surface that approximates the parameterized surface, as described in further detail below.

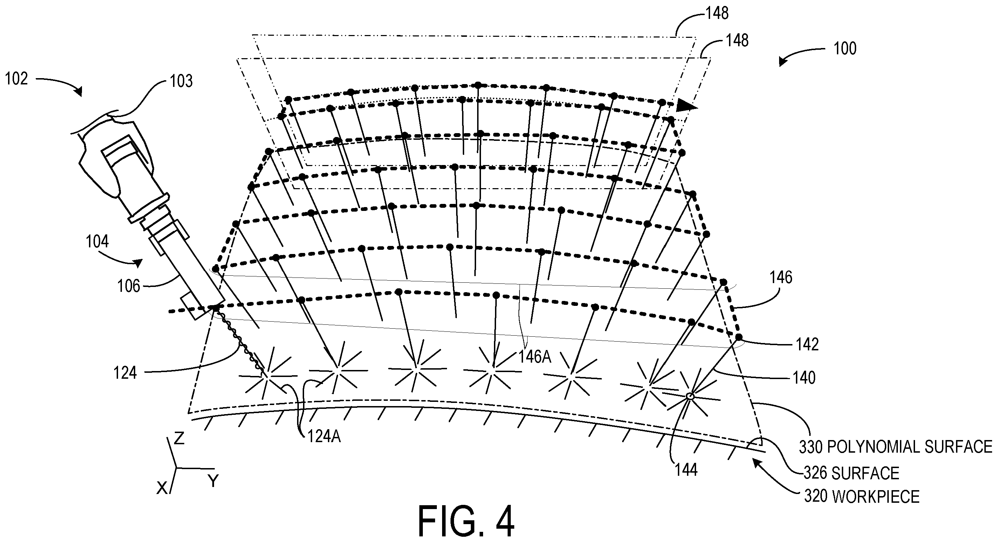

Path generation module 113D is configured to receive the polynomial surface from the surface fitting module 113C and compute a set of surface normal vectors across the polynomial surface to generate a set of waypoints (see 142 in FIG.4), for example at x-y locations in FIG. 4, offset from the polynomial surface by an offset length, for example in the z-direction in FIG. 4. The path generation module 113D is further configured to programmatically generate a motion path (see 146 in FIG. 4) linking a plurality of the waypoints. In this way, a motion path 146 can be generated in three-dimensional space that maintains a constant distance from the actual surface of the workpiece 120, to ensure the laser beam is correctly focused relative the part surface to more effectively control ablation, to thereby inhibit over- or under-ablation.

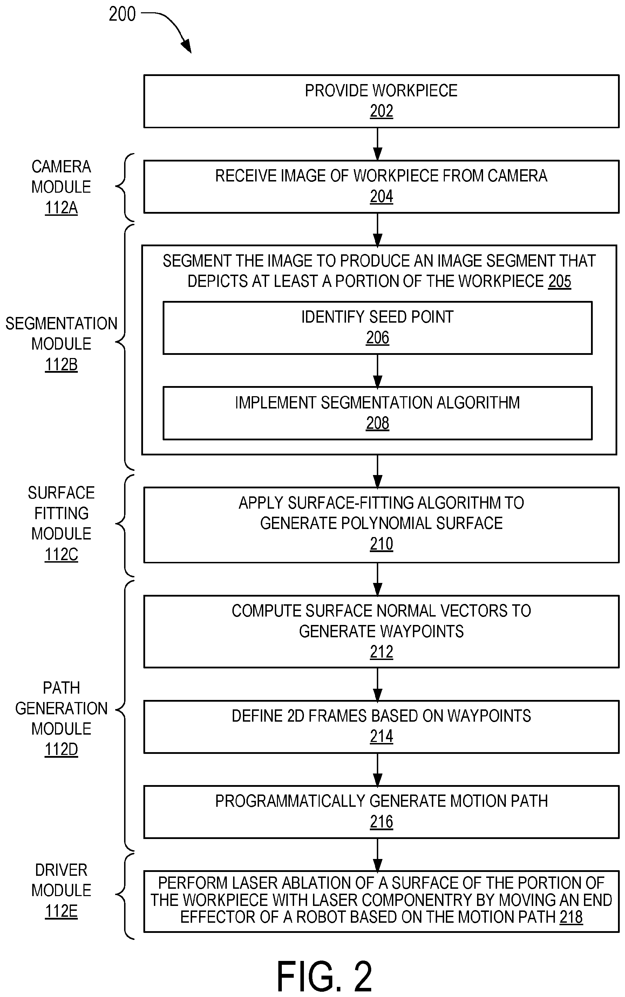

The driver module 113E is configured to receive the motion path 146 and output control commands to the robot 102 and laser componentry 106 to thereby perform laser ablation, using the laser componentry 106, of the surface of the portion of the workpiece 120 based on the motion path 146. This has the dual technical effects of automating the process of generating motion paths for the laser, saving time and computing resources over manual path generation, and also reduces the error in the distance between the laser componentry 106 and the ablated surface of the workpiece 120 by basing the motion path on the actual shape of the scanned workpiece, rather than on an idealized CAD representation of the workpiece, thereby helping reduce instances of over- or under-ablation of material. This process will be further explained with reference to FIGS. 2-4 below.

FIG. 2 shows a flowchart of an example computerized method 200 according to one example implementation of the present disclosure. FIG. 3 shows an example pictorial process flow 300 of the computerized method 200, for ease of understanding. The laser ablation system 100 of FIG. 1 is configured to implement the method 200 illustrated in pictorial. Accordingly, method 200 and pictorial process flow 300 will be described together as being implemented by the laser ablation system 100. However, it will be appreciated that method 200 can be implemented with other suitable hardware and software.

At step 202, method 200 includes providing a workpiece, such as workpiece 120 described above. Pictorial representation 302 depicts a workpiece 320, similar to workpiece 120 described above. More particularly, the system 100 can be configured to provide the workpiece 320 in a manner so that the side 322 faces the camera and laser componentry. The side 322 includes one or more surfaces that will be imaged by the camera 108 and ablated by the laser componentry 106.

The system 100 can accomplish this actively or passively. Actively, the system can pick and place one or more workpieces 320 using a robot 102. Passively, the system can accomplish this by providing a suitable location for a worker to manually place one or more workpieces 320 in an appropriate position and orientation for a robot 102 of the robot laser ablation system 100 to effectively operate upon.

At step 204, the method 200 includes receiving an input image, such as the example image 118 as shown in FIG. 1. This step can be accomplished by camera module 113A of system 100 as described above. Pictorial representation 304 in FIG. 3 shows a captured input image 324 of the workpiece 320. A depth camera can be used as the camera 108 that captures the input image, as described above. Also as described above, the input image includes both color information and depth information for each of a plurality of pixels in the input image.

At step 205, the method 200 includes segmenting the input image to generate a segmented image of at least a portion of the workpiece. This step can be performed by segmentation module 113B described above. Segmenting the input image at 205 can include, at step 206, identifying a seed point in the input image, and at 208 implementing a segmentation algorithm based on the seed point, as described further below. Pictorial representation 306 in FIG. 3 includes an example of a segmented version of the input image 324 of the workpiece 320. A seed point 328 is selected so that it is located in a segment 326 of the input image 324 that includes the workpiece 320. More particularly, the segment 326 is a region of pixels in the input image 324 that depicts a surface of the portion of the workpiece 320. Thus, using a segmentation algorithm (discussed hereafter), the seed point 328 effectively identifies a region of pixels in the input image that depicts a surface of the portion of the workpiece 320.

The identification of the seed point can be accomplished in a variety of ways. For example, the identification of the seed point can be accomplished at least in part by obtaining user selection of the seed point via GUI. Affording such manual selection allows users (such as expert technicians) to directly choose points within regions of interest. Even with the utilization of such expert input, the present technique offers time savings over prior approaches that involved manual generation of each full motion path. One manner in which the manual selection may be performed is by obtaining a user selection of the seed point via a GUI. As shown in FIG. 1, the computing device 110 employs GUI 116 that shows the example image 118 captured by the camera 108. GUI 116 is an example of a GUI that can be employed to receive the seed-point manual selection from a user. In one example, a mouse click may be used to make the selection. In another example, a virtual or physical four-way directional pad may be provided to move and select a cursor at the location of the desired seed point. In another example, candidate seed points may be identified by computer vision algorithms, and the GUI 116 can provide an affordance to toggle through candidates and select an appropriate seed point.

As an alternative to the manual selection discussed above, the identification of that seed point can be accomplished at least in part by programmatic determination of the seed point based on a determination criterion (e.g., thresholds). Examples of such programmatic techniques that may be used to select the seed points for image segmentation include shortest distance from point to camera; separating foreground/background; intensity-based methods; gradient-based approaches; feature-based methods; and machine-learning based approaches.

The shortest distance from point to camera method uses depth information, identifying the closest point in the image to the camera as the seed, which is particularly effective for scenes where the foreground object is distinctly nearer. Another approach involves separating the foreground and background, then calculating the centroid of the foreground region to use as the seed point. Intensity-based methods, such as histogram analysis and adaptive thresholding, exploit variations in pixel intensity to identify potential seed regions, and can also be used. The gradient-based approach can identify edges or localized changes in pixel values to identify the seed point.

Feature-based methods employ techniques like SIFT/SURF (Scale Invariant Feature Transform/Speeded Up Robust Feature) keypoint detection or corner detection to identify distinctive local features as seed points. Machine learning approaches may also be utilized, such as using trained neural network classifiers for semantic segmentation to propose seed points or regions. For video processing, motion-based methods like optical flow or background subtraction can effectively identify moving objects as potential seed points. Saliency detection techniques, based on visual attention models, aim to identify regions that stand out from their surroundings, and can also be used to identify seed points.

At step 208, the method includes implementing a segmentation algorithm using the seed point to identify a region of pixels in the input image that depicts a surface of the portion of the workpiece. It will be appreciated that each pixel in the region has associated two-dimensional (2D) coordinates in the input image and an associated depth coordinate from the camera to the surface. Pictorial representation 308 depicts the result of the segmentation algorithm, showing just segment 326 of the image 324 that has been segmented out of the input image 324. The segment 326 is the region of pixels in the input image 324 that depicts the surface of interest of the portion of the workpiece 320.

Herein, the surface of interest can vary greatly in number and size. For example, the surface of interest can be singular (e.g., one fuselage section) or there can be multiple (multiple small parts on a tray) surfaces of interest. The surface of interest can be small (e.g., fasteners) or quite large (e.g., landing gear assemblies). For smaller parts, cycle times may be reduced by imaging and ablating multiple parts in a single ablation session.

The segmentation algorithm described herein refers to a process used by the segmentation module 113B to divide the input image into two or more segments or parts, with at least one of the segments depicting the workpiece 320. The segmentation algorithm assigns labels to pixels that share certain characteristics indicative of the target segments (e.g., workpiece or background). Examples segmentation algorithms that can be used include thresholding methods, edge detection techniques, region-based segmentation, clustering-based segmentation, and neural network-based approaches.

An example thresholding segmentation algorithm is set forth below.
- Read the input image
- Convert the image to grayscale if in color
- Choose a threshold value (e.g., 128 for middle gray)
- Iterate through each pixel in the image:
   ∘ If pixel value > threshold, set to white (255)
   ∘ If pixel value <= threshold, set to black (0)
- Output the resulting binary image

This example segmentation algorithm segments the image into two regions: one containing all pixels brighter than the threshold (set to white) and another containing all pixels darker than or equal to the threshold (set to black).

Another example segmentation algorithm uses the K-means clustering method. This approach segments an image by grouping pixels with similar color characteristics. An example K-means clustering algorithm follows.
- Read the input image
- Convert the image to a desired color space
- Reshape the image into a list of pixels
- Apply K-means clustering to cluster pixels into K color space clusters
- Assign each pixel to its corresponding cluster
- Create the segmented image with K image segments

The above algorithm segments the image into a specified number (K) of clusters based on color similarity. The K-means algorithm can segment according to pixel values in the input image for example, thereby producing a segmented image where each segment is represented by the mean color of its cluster.

Some implementations of the segmenting of the input image employed by steps 206 and/or 208 can employ an image segmentation model. Examples of such suitable segmentation models include semantic segmentation models, instance segmentation models, panoptic segmentation models, edge detection models, region-based segmentation models, clustering-based segmentation models, region-based segmentation models, clustering-based segmentation models, attention-based segmentation models, real-time segmentation models, nearest neighbor segmentation models, segment anything model (SAM), and the like, as explained below.
- Semantic Segmentation Models: These models assign class labels to every pixel in an image. Examples include U-Net, FCN (Fully Convolutional Networks), and DeepLab.
- Instance Segmentation Models: These models identify and segment individual object instances. Mask R-CNN is a prominent example.
- Panoptic Segmentation Models: Combining semantic and instance segmentation, these models assign both class and instance IDs to each pixel. DETR with a panoptic head is an example.
- Edge Detection Models: These models focus on finding boundaries between regions, like Canny edge detection or HED (Holistically-Nested Edge Detection).
- Region-Based Segmentation Models: These models grow regions from seed points, such as the traditional region growing algorithm or deep learning versions like DeepIGeoS.
- Clustering-Based Segmentation Models: These models group similar pixels, including K-means clustering and deep clustering approaches.
- Attention-Based Segmentation Models: These models use attention mechanisms to focus on relevant image parts, like SETR (Segmentation Transformer).
- Real-Time Segmentation Models: Optimized for speed, these models include ENet and SwiftNet.
- Nearest Neighbor Segmentation Models: These models classify pixels based on the labels of their nearest neighbors in feature space. While traditionally used with hand-crafted features, they can also be applied to deep feature representations. An example is the K-Nearest Neighbors (KNN) algorithm adapted for segmentation tasks.
- Segment Anything Model (SAM): Developed by Meta AI, SAM is a promptable segmentation model designed to segment any object in an image based on various types of prompts (points, boxes, or text). This model is flexible and often can generalize to new objects and images without additional training.

At step 210, the method 200 includes applying a surface-fitting algorithm to generate a polynomial surface (e.g., a third-degree polynomial) that is fit to the surface in the segmented image. This step can be accomplished by surface fitting module 113C described above, for example. The pictorial representation 310 in FIG. 3 illustrates a depiction of the polynomial surface 330 fit to the surface of the segmented image. The third-degree polynomial is fitted to the surface as an approximation to the surface in the segmented image. This process addresses noise in the scan and achieves a smooth estimation of the surface. Alternatively, a polynomial of another degree may be selected, as the technique is not limited to third degree polynomials.

The surface-fitting algorithm uses mathematical techniques to approximate a continuous polynomial surface from discrete data points in multidimensional space, i.e., the x, y, and z (depth) values from the input image received from camera 108. The surface-fitting algorithm aims to find a polynomial function that best fits the parameterized image data, within an acceptable degree of error. This process typically involves determining the coefficients of a polynomial equation. The degree of the polynomial can be selected based on a tradeoff between fitting accuracy and computational complexity. Lower-degree polynomials, such as bilinear or biquadratic functions, offer simplicity and speed but can miss fine details, while higher-degree polynomials like bicubic or higher-order functions can capture more intricate surface features at the cost of increased computational demands and potential overfitting.

The fitting process can employ least squares optimization, minimizing the sum of squared differences between the polynomial surface and the actual data points. This approach can be extended to weighted least squares to account for data reliability or importance, if desired. The surface fitting algorithm can also incorporate techniques to handle outliers or noise in the data, ensuring a smooth and representative surface. Some implementations can use adaptive degree selection or piecewise polynomial fitting to optimize the balance between accuracy and efficiency across different regions of the data space. The resulting polynomial surface provides a continuous mathematical representation of the original discrete data in the segment 326 of the input image 324, enabling interpolation, analysis, and visualization of the underlying patterns and trends in the data set.

An example of steps to accomplish a basic polynomial surface-fitting algorithm follows.
- Collect input data points (x, y, z coordinates from the input image)
- Choose a degree of the polynomial (e.g., 2 for biquadratic)
- Construct a design matrix using the input coordinates
- Formulate normal equations
- Solve a system of equations to find polynomial coefficients
- Use the coefficients to construct the fitted surface function

This example demonstrates fitting a biquadratic or other degree polynomial surface to discrete data. The algorithm constructs a design matrix, solves for coefficients (for example, using least squares), and returns both the fitted surface function and its coefficients.

Another example of a polynomial surface-fitting algorithm uses radial basis functions (RBF) for surface fitting. RBF interpolation is particularly useful for scattered data points and can handle more complex surface shapes. An outline of the steps for such an algorithm follows.
- Collect input data points (x, y, z coordinates)
- Choose a radial basis function (e.g., Gaussian)
- Construct an interpolation matrix
- Solve for RBF coefficients
- Create a fitted surface function

The RBF method creates a smooth surface that passes through all data points and can accommodate irregularly spaced data points to represent complex surface shapes. A variety of RBF types can be utilized, including multiquadric, gaussian, linear, cubic, etc.

As shown in FIG. 2 at step 212, method 200 includes computing a set of surface normal vectors across the polynomial surface to generate a set of waypoints offset from the polynomial surface by a computed offset length of the surface normal vectors. The computed offset length can in one implementation be uniform. When uniform energy is applied to the laser from a uniform offset distance, a uniform ablation depth can be achieved, assuming the workpiece material is uniform. In other implementations the computed offset length can vary for subsets of the waypoints. Varying offset distances can be used to control the depth of ablation by the laser. One potential application of this is as follows. The workpiece may have a coating that is thicker in one section than in another section. For the thicker section, a greater depth of removal can be achieved by computing offsets that are smaller and thus ablating from a closer location. For the thinner section, larger offsets may be computed, resulting in a smaller depth of ablation. For fine adjustments in addition or as an alternative to adjustments in the motion path, a z-adjustment mechanism can be added to the laser componentry to be used to adjust the focus of the laser beam itself, thereby slightly increasing or decreasing the depth of ablation.

The path generation module 113D of system 100 of FIG. 1 is configured to perform this step. Pictorial representation 312 of FIG. 3 shows a set 331 of waypoints 142 illustrated being a uniform offset length (i.e., the length of the surface normal vectors) from the polynomial surface 330. FIG. 4 illustrates in greater detail an example of the polynomial surface 330 with surface normal vectors 140 extending from origin points 144 on the polynomial surface 330 in a normal direction to the polynomial surface 330 for a uniform distance and terminating in waypoints 142. The waypoints 142 may be evenly spaced, or spaced according to a varying density function. To compute the position of the waypoints, the path generation module 113D computes a normal vector from the origin points 144 on the polynomial surface 330, to thereby establish the position of each waypoint 142. The origin points 144 may be determined by overlaying or projecting a grid onto the polynomial surface, for example.

As shown in FIG. 2 at step 214, the method includes defining two-dimensional (2D) frames that contain respective subsets of the waypoints. Examples of the two-dimensional frames are shown in pictorial representation 314 and at 148 in FIG. 4. The two-dimensional frames 148 are planar, and used to align the waypoints into planes. While a pair of two-dimensional frames 148 are shown in FIG. 4, it will be appreciated that multiple two-dimensional frames 148 are defined across the polynomial surface 330. The two-dimensional frames 148 are parallel to each other, spaced apart at computed distances (which may be uniform or varying according to a function), and slice through the polynomial surface 330 at intervals. The waypoints 142 are fit to lie in the two-dimensional frames 148. By fitting the waypoints 142 to the two-dimensional frames 148, a motion path 146 can be generated in the next step discussed below, that has a minimum of back-and-forth wavy movement due to planar alignment of the waypoints.

At step 216 in FIG. 2, the method 200 further includes programmatically generating a motion path linking the waypoints. This step is performed by the path generation module 113D of FIG. 1. An example motion path 146 is illustrated in FIG. 4. As shown in FIG. 4, subpaths 146A of the motion path 146 link subsets of the waypoints 142 in each two-dimensional frame 148. The system 100 programmatically generates the motion path 146 in camera space. The processing circuitry 112 can be configured to convert the motion path 146 to a frame of reference of the robot 102. The robot 102 can then be guided to move its actuator 103 and end effector 104 so as to move the laser componentry 106 along the motion path 146. Pictorial representation 316 in FIG. 3 shows an example robot 102 configured to move the laser componentry 106 along the converted motion path 146 in the robot frame of reference, and FIG. 4 provides additional detailed illustration of the robot 102 moving the laser componentry 106 along the motion path 146.

As shown in FIG. 4, the motion path 146 can be a serpentine raster path. A serpentine raster path, also called a snake or meander pattern, is a systematic motion path. It covers an area of the surface 326 of the workpiece 320 in a back-and-forth pattern, starting from one corner and moving in parallel lines across the surface 326 while alternating directions. This approach promotes efficient and uniform coverage of rectangular or square areas, minimizes non-productive movement, and allows for continuous motion. The motion path 146 is easily adaptable to different dimensions and resolutions, and its predictable nature simplifies programming and operator situational awareness. In processes like laser ablation, it enables consistent treatment across the target surface, promoting uniform quality of removal of material from the target surface.

Other implementations can employ other motion path 146 patterns. For circular areas or centralized energy concentration, spiral paths can be used. Concentric paths, following shapes from the outside in or vice versa, are effective for maintaining consistent edge quality. Vector paths are suitable for complex shapes or selective ablation, following pre-defined contours. Crosshatch patterns, combining perpendicular raster movements, are useful for uniform ablation depth or creating textured surfaces. Radial paths, moving along lines from a central point, can be used with circular or spherical surfaces. Adaptive systems can use paths that adjust in real-time based on sensor feedback, allowing precision on irregular surfaces.

The overall motion path 146 can be divided into subpaths 146A as discussed above, each linking a subset of waypoints 142 within two-dimensional frames 148, suggesting the motion is planned in 2D slices of a 3D space. Initially, the system 100 generates this motion path 146 in camera space, which relates to the perspective of a camera observing the environment. In some implementations, the system 100 converts this camera-space path into the frame of reference of the robot 102. This conversion allows the robot 102 to understand and execute the motion in relation to the position and orientation of the laser componentry 106 attached to the end effector 104 of the robot 102, rather than the camera's viewpoint. By converting the motion path 146 to robot coordinate system, the motion path 146 can be compatible with robot drivers and other robot-specific software.

At step 218 of FIG. 2, method 200 includes performing laser ablation of the surface of the portion of the workpiece by: moving the robot to cause the laser componentry mounted on the end effector to travel along the converted motion path; and intermittently or continuously energizing the laser as it travels along the converted motion path. The driver module 113E of FIG. 1 can be configured to perform this step. FIG. 4 illustrates laser componentry 106 traveling along motion path 146 and continuously emitting energized concentrated beam of light 124 at the surface 326 of the workpiece 320 while moving. In some implementations, the laser componentry106 can be moved to a static location, pausing at each waypoint 142 (a.k.a. tiled ablation), to allow laser ablation to occur while the robot is stationary relative to the part surface. In other implementations, the laser light source 106A of the laser componentry 106 can be fired while the robot 102 is moving the effector 104 (a.k.a. continuous ablation) relative to the part surface. This approach may be configured to use a "bow-tie" algorithm to generate parallel raster lines, as described below. In all of these scenarios the part can move relative to fixed laser componentry (e.g. a conveyor belt).

The bow-tie algorithm for laser ablation is a specialized motion path strategy designed for generating parallel raster lines despite having relative motion between the scanner of the laser componentry and the part surface. A simple approach to continuous motion processing is to simply move the X-axis scanner mirror back-and-forth as the scanner of the laser componentry moves in the Y direction. This results in a classic zig-zag pattern. The zig-zag pattern is undesirable for many applications due to the degree of spot overlap resulting from rows which have correct spacing in the middle, but a large degree of overlap at the edges. This can create hot spots or ridges rather than consistent material removal. To correct for this, the "bow tie" algorithm, named for the shape it creates when viewed from above, moves both X and Y axis in a programmed pattern while the scanner of the laser componentry is continuously moving in the Y direction. The mirror of the scanner of the laser componentry moves across the scan field X-axis at a backwards angle to account for the forward motion of the head, then "jumps" forward in the Y-axis to move back across the scan field across the X-axis in the opposite direction. If timed correctly, the algorithm compensates for the forward motion of the head resulting in perfectly parallel raster lines.

Pictorial representation 318 shows the workpiece 320 after a tessellated path of patterns have been laser ablated thereon. The laser ablation pattern shown at ablation zone 332 of pictorial representation 318 is square. Other implementations can be hexagons, triangles, rectangles (e.g., other than squares), or other shapes. The square ablation zone 332 represents one such laser ablation pattern of the path performed. Hexagon pattern tessellation overlaps less and, thus, is known to be more efficient. The hexagon pattern makes more efficient use of round laser optics, increasing the total area that can be processed per location.. This minimizes the number of moves made by the robot 102 to have full coverage. It also minimizes the overlaps to a maximum of three times, which can be beneficial to certain applications. It can be appreciated that the shape of the ablation zone can be changed from zone to zone as needed.

Step 218 uses laser ablation to remove material from the surface 326 of workpiece 320. The method employs the robot 102 equipped with laser componentry 106 mounted on its end effector 104, which is the part of the robot 102 that interacts directly with the workpiece 320. The movement of the robot 102 is guided by a pre-planned and converted motion path 146 as shown in FIG. 4, ensuring accurate positioning of the laser componentry 106 over the target area. As the robot 102 moves, following this carefully calculated trajectory, the laser light source 106A of the laser componentry 106 is either continuously activated or pulsed intermittently. This controlled energizing of the laser allows for precise material removal from the surface 326 of the workpiece 320. The intermittent activation can be used for creating specific patterns or for controlling the depth of ablation, while continuous energizing can be employed for more uniform material removal or cutting. The converted motion path 146 can take into account kinematics of the robot 102 and specific parameters of the ablation process, such as speed and angle of approach. This robotic laser ablation method combines elements of robotics, motion control, laser technology, and materials processing to achieve highly accurate and repeatable surface modification or material removal.

In some implementations, step 218 includes an ablation quality-control process. That is, during or after laser ablation, the workpiece 320 is examined to determine if the quality meets pre-defined standards, such as amount of material removal. Such a quality-control process can include the camera 108 being further configured to capture confirmation image of the surface 326 of the portion of the workpiece 320 during and/or after performance of laser ablation on the surface 326 of the portion of the workpiece 320. The quality-control process can further include the processing circuitry 112 is further configured to: determine, based on the confirmation image, that quality of laser ablation of the surface 326 of the portion of the workpiece 320 is insufficient (based on some pre-defined criteria) and; in response that determination, performing further laser ablation on the surface 326 of the portion of the workpiece 320.

In some implementations, the surface (e.g., surface 326 of workpiece 320 in FIG. 3) being processed can contain areas that should not be subjected to the ablation process, known as exclusion zones. In some implementations, these zones can be identified by the user via manual selection using the GUI, such as GUI 116 of computing device 110. In other implementations, these zones can be automatically determined based on programmatically determined criteria.

These exclusion zones can represent various features or critical areas on the workpiece 320. For instance, they can be pre-existing holes or openings that serve a functional purpose and must remain intact. Alternatively, they can be sensitive areas such as seals, precision-engineered surfaces, or regions with specific coatings that are to be preserved. The motion path 146 for the laser componentry 106 can be carefully designed to navigate around these exclusion zones, ensuring that the laser emitted by the laser componentry 106 does not interact with these protected areas. If appropriate, exclusion zones can be formally designated within a safety-rated motion control system (e.g. Kuka SafeOperate, ABB SafeMove or similar) ensuring further protection by preventing the robot from entering exclusion zones, or by preventing the laser from firing at designated surfaces. This level of control over the motion program helps maintain the integrity of the workpiece 320 while still achieving the desired ablation results in the surrounding areas.

In one or more implementations described herein, a single input image is captured which allows for subject surfaces that are flat or have a gentle curve thereto. The gentle curve can be one, two, or three directions. However, in other implementations, multiple images can be captured of a workpiece 320 and such images can be stitched together to create a motion path 146 the travels along a surface with a complex curvature or is too large to capture in one image.

In one or more implementations, multiple regions of a complex surface 326 can be imaged separately and the images stitched together to create a motion path 146 of over the complex surface 326 (e.g., a ball or landing gear).

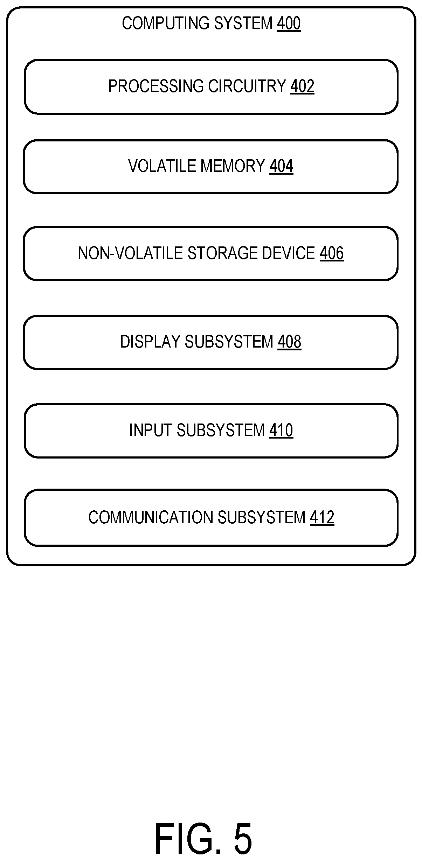

FIG. 5 schematically shows a non-limiting embodiment of a computing system 400 that can enact one or more of the methods and processes described above. Computing system 400 is shown in simplified form. Computing system 400 can embody other computing system embodiments described above. Computing system 400 includes processing circuitry 402, volatile memory 404, and a non-volatile storage device 406. Computing system 400 can optionally include a display subsystem 408, input subsystem 410, communication subsystem 412, and/or other components not shown.

Processing circuitry typically includes one or more processors, which are physical devices configured to execute instructions. For example, the processing circuitry can be configured to execute instructions that are part of one or more applications, programs, routines, libraries, objects, components, data structures, or other logical constructs. Such instructions can be implemented to perform a task, implement a data type, transform the state of one or more components, achieve a technical effect, or otherwise arrive at a desired result.

The processing circuitry can include one or more physical processors configured to execute software instructions. Additionally or alternatively, the processing circuitry can include one or more hardware logic circuits or firmware devices configured to execute hardware-implemented logic or firmware instructions. Processors of the processing circuitry 402 can be single-core or multi-core, and the instructions executed thereon can be configured for sequential, parallel, and/or distributed processing. Individual components of the processing circuitry optionally can be distributed among two or more separate devices, which can be remotely located and/or configured for coordinated processing. For example, aspects of the computing system disclosed herein can be virtualized and executed by remotely accessible, networked computing devices configured in a cloud-computing configuration. In such a case, these virtualized aspects are run on different physical processing circuitry of various different machines, it will be understood. These different physical processing circuitries of the different machines will be understood to be collectively encompassed by processing circuitry 402.

Non-volatile storage device 406 includes one or more physical devices configured to hold instructions executable by the processing circuitry to implement the methods and processes described herein. When such methods and processes are implemented, the state of non-volatile storage device 406 can be transformed-e.g., to hold different data.

Non-volatile storage device 406 can include physical devices that are removable and/or built in. Non-volatile storage device 406 can include optical memory, semiconductor memory, and/or magnetic memory, or other mass storage device technology. Non-volatile storage device 406 can include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 can include physical devices that include random access memory. Volatile memory 404 is typically utilized by processing circuitry 402 to temporarily store information during processing of software instructions. It will be appreciated that volatile memory 404 typically does not continue to store instructions when power is cut to the volatile memory 404.

Aspects of processing circuitry 402, volatile memory 404, and non-volatile storage device 406 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" can be used to describe an aspect of computing system 400 typically implemented in software by a processor to perform a particular function using portions of volatile memory, which function involves transformative processing that specially configures the processor to perform the function. Thus, a module, program, or engine can be instantiated via processing circuitry 402 executing instructions held by non-volatile storage device 406, using portions of volatile memory 404. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 408 can be used to present a visual representation of data held by non-volatile storage device 406. The visual representation can take the form of a graphical user interface (GUI). As the herein described methods and processes change the data held by the non-volatile storage device, and thus transform the state of the non-volatile storage device, the state of display subsystem 408 can likewise be transformed to visually represent changes in the underlying data. Display subsystem 408 can include one or more display devices utilizing virtually any type of technology. Such display devices can be combined with processing circuitry 402, volatile memory 404, and/or non-volatile storage device 406 in a shared enclosure, or such display devices can be peripheral display devices.

When included, input subsystem 410 can comprise or interface with one or more user-input devices such as a keyboard, mouse, touch screen, camera, or microphone.

When included, communication subsystem 412 can be configured to communicatively couple various computing devices described herein with each other, and with other devices. Communication subsystem 412 can include wired and/or wireless communication devices compatible with one or more different communication protocols. As non-limiting examples, the communication subsystem can be configured for communication via a wired or wireless local- or wide-area network, broadband cellular network, etc. In some embodiments, the communication subsystem can allow computing system 400 to send and/or receive messages to and/or from other devices via a network such as the Internet.

Further, the disclosure comprises configurations according to the following examples.

Example 1. A robotic laser ablation system comprising: a robot having an end effector configured to move in a plurality of degrees of freedom; laser componentry mounted to the end effector; a camera configured to capture light and depth information in an input image of a workpiece; processing circuitry and associated memory storing instructions that when executed cause the processing circuitry to: receive the input image; segment the input image to produce an image segment that depicts at least a portion of the workpiece; apply a surface-fitting algorithm to generate a polynomial surface that is fit to the surface in the image segment; compute a set of surface normal vectors across the polynomial surface and generate a set of waypoints offset from the polynomial surface by an offset length; programmatically generate a motion path linking a plurality of the waypoints; and perform laser ablation of the surface of the portion of the workpiece with the laser componentry by moving the end effector of the robot based on the motion path.

Example 2. The robotic laser ablation system of example 1, wherein the segmenting is accomplished at least in part by: identifying a seed point in the input image; and implementing a segmentation algorithm using the seed point to identify a region of pixels in the input image that depicts a surface of the portion of the workpiece, each pixel in the region having associated two-dimensional coordinates in the input image and an associated depth coordinate from the camera to the surface.

Example 3. The robotic laser ablation system of example 2, wherein the processing circuitry is configured to display on a graphical user-interface (GUI) a confirmation selector configured to receive user input confirming the seed point and/or confirming the image segment contains the surface.

Example 4. The robotic laser ablation system of example 2, wherein the identifying of the seed point is accomplished at least in part by: user selection of the seed point via a graphical user-interface (GUI), or programmatic determination of the seed point based on a determination criterion.

Example 5. The robotic laser ablation system of any of examples 1-4, wherein the processing circuitry is configured to define two-dimensional frames that contain respective subsets of the waypoints, and wherein the subsets of the waypoints in each two-dimensional frame are linked by subpaths of the motion path, and wherein the motion path is generated in camera space, and the processing circuitry is further configured to convert the motion path to a frame of reference of the robot.

Example 6. The robotic laser ablation system of any of examples 1-5, wherein the laser componentry includes a laser source and/or a laser guiding optical element, and the laser ablation is performed by: moving the robot to cause the laser componentry mounted on the end effector to travel along the motion path; and intermittently or continuously energizing the laser source as the laser componentry travels along the motion path.

Example 7. The robotic laser ablation system of any of examples 1-6, wherein the processing circuitry is configured to segment the input image using a segmentation model selected from the group consisting of include semantic segmentation models, instance segmentation models, panoptic segmentation models, edge detection models, region-based segmentation models, clustering-based segmentation models, attention-based segmentation models, real-time segmentation models, nearest neighbor segmentation models, and a segment anything model.

Example 8. The robotic laser ablation system of any of examples 1-7, wherein the workpiece is one of a plurality of workpieces the camera is configured to concurrently capture in the image, and the segmentation by the processing circuitry further segments the input image into a plurality of image segments, each containing a respective one of the plurality of workpieces.

Example 9. The robotic laser ablation system of any of examples 1-8, wherein the laser ablation is applied in a square, rectangle, triangle, and/or hexagon pattern.

Example 10. The robotic laser ablation system of any of examples 1-9, wherein: the camera being further configured to capture confirmation image of the surface of the portion of the workpiece during and/or after performance of laser ablation on the surface of the portion of the workpiece; the processing circuitry is further configured to: determine, based on the confirmation image, that quality of laser ablation of the surface of the portion of the workpiece is insufficient; and in response that determination, perform further laser ablation on the surface of the portion of the workpiece.

Example 11. A method that facilitates robotic laser ablation, the method comprising: receiving an input image of a workpiece from a camera mounted to an end effector of a robot, the end effector being configured to move in a plurality of degrees of freedom and the camera being configured to capture light and depth information in the input image of the workpiece; segmenting the input image to produce an image segment that depicts at least a portion of the workpiece; applying a surface-fitting algorithm to generate a polynomial surface that is fit to the surface in the image segment; computing a set of surface normal vectors across the polynomial surface and generating a set of waypoints offset from the polynomial surface by an offset length; programmatically generating a motion path linking a plurality of the waypoints of the set of waypoints; and performing, using laser componentry mounted to the end effector of the robot, laser ablation of the surface of the portion of the workpiece based on the motion path.

Example 12. The method of example 11, wherein the segmenting is accomplished at least in part by: identifying a seed point in the input image; and implementing a segmentation algorithm using the seed point to identify a region of pixels in the input image that depicts a surface of the portion of the workpiece, each pixel in the region having associated two-dimensional coordinates in the input image and an associated depth coordinate from the camera to the surface.

Example 13. The method of example 12, further comprising displaying on a graphical user-interface (GUI) a confirmation selector configured to receive user input confirming the seed point and/or confirming the image segment contains the surface.

Example 14. The method of example 12, wherein the identifying of the seed point is accomplished at least in part by: obtaining user selection of the seed point via a graphical user-interface (GUI); or programmatically determining the seed point based on a determination criterion.

Example 15. The method of any of examples 11-14, further comprising defining two-dimensional frames that contain respective subsets of the waypoints, wherein the subsets of the waypoints in each two-dimensional frame are linked by subpaths of the motion path, and wherein the generating includes the motion path being generated in camera space, and the processing circuitry is further configured to convert the motion path to a frame of reference of the robot.

Example 16. The method of any of examples 11-15, wherein the laser componentry includes a laser source and/or a laser guiding optical element, and the performing laser ablation includes: moving the robot to cause the laser componentry mounted on the end effector to travel along the motion path; and intermittently or continuously energizing the laser source as the laser componentry travels along the motion path.

Example 17. The method of any of examples 11-16, wherein the segmenting the input image employs a segmentation model selected from the group consisting of include semantic segmentation models, instance segmentation models, panoptic segmentation models, edge detection models, region-based segmentation models, clustering-based segmentation models, attention-based segmentation models, real-time segmentation models, nearest neighbor segmentation models, and a segment anything model.

Example 18. The method of any of examples 11-17, wherein the workpiece is one of a plurality of workpieces the camera is configured to concurrently capture in the image, and the segmenting includes further segmenting the input image into a plurality of image segments, each containing a respective one of the plurality of workpieces.

Example 19. The method of any of examples 11-18, wherein the laser ablation is applied in a square, rectangle, triangle, and/or hexagon pattern.

Example 20. A robotic laser ablation system, comprising: a robot configured to move an end effector in a plurality of degrees of freedom; laser componentry mounted to the end effector, the laser componentry including a laser source and/or a laser guiding optical element; a camera mounted to the end effector, the camera being configured to capture an input image of a workpiece, the input image including color information and depth information for each of a plurality of pixels in the input image; processing circuitry and associated memory storing instructions that when executed cause the processing circuitry to: receive the input image; segment the input image to generate a segmented image of at least a portion of the workpiece, at least in part by: identifying a seed point in the input image, wherein the identifying of the seed point is accomplished at least in part by: obtaining user selection of the seed point via a graphical user-interface (GUI), or programmatic determination of the seed point based on a determination criterion; implementing a segmentation algorithm using the seed point to identify a region of pixels in the input image that depicts a surface of the portion of the workpiece, each pixel in the region having associated two-dimensional coordinates in the input image and an associated depth coordinate from the camera to the surface; apply a surface-fitting algorithm to generate a polynomial surface that is fit to the surface in the segmented image; compute a set of surface normal vectors across the polynomial surface and generate a set of waypoints offset from the polynomial surface by an offset length of the surface normal vectors; define two-dimensional frames that contain respective subsets of the waypoints; programmatically generate a motion path linking the waypoints, wherein the subsets of the waypoints in each two-dimensional frame are linked by subpaths of the motion path, wherein the motion path is generated in camera space, the processing circuitry further being configured to convert the motion path to a frame of reference of the robot; perform laser ablation of the surface of the portion of the workpiece by: moving the robot to cause the laser componentry mounted on the end effector to travel along the converted motion path; and intermittently or continuously energizing the laser source as the laser componentry travels along the converted motion path.

"And/or" as used herein is defined as the inclusive or V, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein can represent one or more of any number of processing strategies. As such, various acts illustrated and/or described can be performed in the sequence illustrated and/or described, in other sequences, in parallel, or omitted. Likewise, the order of the above-described processes can be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Parts List:**

| | |
|---|---|
| robotic laser ablation system | 100 |
| robot | 102 |
| base | 102A |
| actuator | 103 |
| end effector | 104 |
| laser componentry | 106 |
| laser light source | 106A |
| laser guiding optical elements | 106B |
| camera | 108 |
| camera | 108A |
| displacement sensor | 109 |
| associated computing device | 110 |
| display | 110A |
| wireless connection | 111 |
| processing circuitry | 112 |
| laser ablation program | 113 |
| camera module | 113A |
| segmentation module | 113B |
| surface fitting module | 113C |
| path generation module | 113D |
| driver module | 113E |
| memory | 114 |
| GUI | 116 |
| controls | 116A |
| example image | 118 |
| workpiece | 120 |
| side | 122 |
| ligth | 124 |
| view | 126 |
| camera axis | 130 |
| surface normal vectors | 140 |
| waypoints | 142 |
| origin points | 144 |
| motion path | 146 |
| subpaths | 146A |
| two dimensional frames | 148 |
| method | 200 |
| workpiece | 120, 320 |
| side | 322 |
| input image | 118, 324 |
| segment | 326 |
| seed point | 328 |
| polynomial surface | 330 |
| set | 331 |
| ablation zone | 332 |
| computing system | 400 |
| processing circuitry | 402 |
| volatile memory | 404 |
| non-volatile storage device | 406 |
| display subsystem | 408 |
| input subsystem | 410 |
| communication subsystem | 412 |

## Claims

1. A robotic laser ablation system (100) comprising:
a robot (102) having an end effector (104) configured to move in a plurality of degrees of freedom;
laser componentry (106) mounted to the end effector (104);
a camera (108) configured to capture light and depth information in an input image (118, 324) of a workpiece;
processing circuitry (112) and associated memory (114) storing instructions that when executed cause the processing circuitry (112) to:
receive the input image (118, 324);
segment the input image (118, 324) to produce an image segment that depicts at least a portion of the workpiece (120, 320);
apply a surface-fitting algorithm to generate a polynomial surface (330) that is fit to the surface in the image segment (326);
compute a set of surface normal vectors across the polynomial surface (330) and generate a set of waypoints (142) offset from the polynomial surface (330) by an offset length;
programmatically generate a motion path (146) linking a plurality of the waypoints (142); and
perform laser ablation of the surface of the portion of the workpiece (120, 320) with the laser componentry (106) by moving the end effector (104) of the robot (102) based on the motion path (146).

2. The robotic laser ablation system (100) of claim 1, wherein the segmenting is accomplished at least in part by:
identifying a seed point (328) in the input image (118, 324); and
implementing a segmentation algorithm using the seed point (328) to identify a region of pixels in the input image (118, 324) that depicts a surface of the portion of the workpiece (120, 320), each pixel in the region having associated two-dimensional coordinates in the input image (118, 324) and an associated depth coordinate from the camera (108) to the surface.

3. The robotic laser ablation system (100) of any one of the preceding claims , wherein the processing circuitry (112) is configured to display on a graphical user-interface (GUI) (116) a confirmation selector configured to receive user input confirming the seed point (328) and/or confirming the image segment (326) contains the surface.

4. The robotic laser ablation system (100) of claim 2, wherein the identifying of the seed point (328) is accomplished at least in part by:
user selection of the seed point (328) via a graphical user-interface (GUI) (116); or
programmatic determination of the seed point (328) based on a determination criterion.

5. The robotic laser ablation system (100) of any one of the preceding claims,
wherein the processing circuitry (112) is configured to define two-dimensional frames (148) that contain respective subsets of the waypoints (142), and wherein the subsets of the waypoints (142) in each two-dimensional frame (148) are linked by subpaths (146A) of the motion path (146), and
wherein the motion path (146) is generated in camera space, and the processing circuitry (112) is further configured to convert the motion path (146) to a frame of reference of the robot (102).

6. The robotic laser ablation system (100) of any one of the preceding claims, wherein the laser componentry (106) includes a laser source (106A) and/or a laser guiding optical element (106B), and the laser ablation is performed by:
moving the robot (102) to cause the laser componentry (106) mounted on the end effector (104) to travel along the motion path (142); and
intermittently or continuously energizing the laser source (106A) as the laser componentry (106) travels along the motion path (142).

7. The robotic laser ablation system (100) of any one of the preceding claims, wherein the processing circuitry (112) is configured to segment the input image (118, 324) using a segmentation model selected from the group consisting of include semantic segmentation models, instance segmentation models, panoptic segmentation models, edge detection models, region-based segmentation models, clustering-based segmentation models, attention-based segmentation models, real-time segmentation models, nearest neighbor segmentation models, and a segment anything model.

8. The robotic laser ablation system (100) of any one of the preceding claims, wherein the workpiece (120, 320) is one of a plurality of workpieces (120, 320) the camera (108) is configured to concurrently capture in the image, and the segmentation by the processing circuitry (112) further segments the input image (118, 324) into a plurality of image segments (326), each containing a respective one of the plurality of workpieces (120, 320).

9. The robotic laser ablation system (100) of any one of the preceding claims, wherein the laser ablation is applied in a square, rectangle, triangle, and/or hexagon pattern.

10. The robotic laser ablation system (100) of any one of the preceding claims, wherein:
the camera (108) being further configured to capture confirmation image of the surface of the portion of the workpiece (120, 320) during and/or after performance of laser ablation on the surface of the portion of the workpiece (120, 320);
the processing circuitry (112) is further configured to:
determine, based on the confirmation image, that quality of laser ablation of the surface of the portion of the workpiece is insufficient; and
in response that determination, perform further laser ablation on the surface of the portion of the workpiece.

11. A method (200) that facilitates robotic laser ablation, the method comprising:
receiving (204) an input image of a workpiece from a camera mounted to an end effector of a robot, the end effector being configured to move in a plurality of degrees of freedom and the camera being configured to capture light and depth information in the input image of the workpiece;
segmenting (205) the input image to produce an image segment that depicts at least a portion of the workpiece;
applying (210) a surface-fitting algorithm to generate a polynomial surface that is fit to the surface in the image segment;
computing (212) a set of surface normal vectors across the polynomial surface and generating a set of waypoints offset from the polynomial surface by an offset length;
programmatically generating (214) a motion path linking a plurality of the waypoints of the set of waypoints; and
performing (218), using laser componentry mounted to the end effector of the robot, laser ablation of the surface of the portion of the workpiece based on the motion path.

12. The method (200) of claim 11, wherein the segmenting is accomplished at least in part by:
identifying (206) a seed point in the input image; and
implementing (208) a segmentation algorithm using the seed point to identify a region of pixels in the input image that depicts a surface of the portion of the workpiece, each pixel in the region having associated two-dimensional coordinates in the input image and an associated depth coordinate from the camera to the surface.

13. The method (200) of claim 12, further comprising displaying on a graphical user-interface (GUI) a confirmation selector configured to receive user input confirming the seed point and/or confirming the image segment contains the surface.

14. The method (200) of any one of claims 12-13, wherein the identifying (206) of the seed point is accomplished at least in part by:
obtaining user selection of the seed point via a graphical user-interface (GUI); or
programmatically determining the seed point based on a determination criterion.

15. The method (200) of any one of claims 11-14, further comprising defining (214) two-dimensional frames that contain respective subsets of the waypoints, wherein the subsets of the waypoints in each two-dimensional frame are linked by subpaths of the motion path, and wherein the generating includes the motion path being generated in camera space, and the processing circuitry is further configured to convert the motion path to a frame of reference of the robot.
